# EUROPEAN PATENT SPECIFICATION

(11) **EP 2 908 965 B1**
(45) Date of publication and mention of the grant of the patent: **28.12.2016**
(21) Application number: 13801763.7
(22) Date of filing: 20.09.2013
(51) Int. Cl.: B21F 23/00

(54) **METHOD AND APPARATUS FOR LOADING METAL RODS OR BARS**
VERFAHREN UND VORRICHTUNG ZUM LADEN VON METALLSTANGEN
PROCÉDÉ ET APPAREIL PERMETTANT DE CHARGER DES TIGES OU BARRES DE MÉTAL

(30) Priority: 21.09.2012 IT BO20120507
(43) Date of publication of application: 26.08.2015
(73) Proprietor: Schnell S.p.A., 61030 Montemaggiore al Metauro PU (IT)
(72) Inventor: PRIULI, Dante Bruno, I-25040 Esine (BS) (IT)
(74) Representative: Manzella & Associati
(86) International application number: PCT/IB2013/058708
(87) International publication number: WO 2014/045242

(56) References cited:
- EP-A2- 0 188 850
- EP-A2- 1 356 876

## Description

### Technical Field

The present invention regards a method and an apparatus for automatic feeding metal rods in bars, in particular iron rods for reinforced concrete, in plants intended for manufacturing such rods or for other similar uses.

### Background Art

It is known that the iron rods used for example for manufacturing reinforcements for reinforced concrete can be obtained from steel rods in bars. To such purpose, bars are fed, singularly or in groups, to operating machines that automatically accomplish their manufacturing into a series of required products. For example, the working cycle of the bars can usually provide for cutting to measure by an appropriate cutting apparatus, and subsequently for possible folding by a shaping apparatus.

Plants intended in particular for cutting and folding such rods in bars usually provide a storing warehouse, also called stock magazine or ironworks, in which the bars are tidily stored, according to diameters and/or length, and from which they are progressively picked up to be fed to the operating machines.

Apparatuses are also known, which are able to draw or feed the correct number of bars to the operating machine, such number being determined according to requirements of the manufacturing, for example in relation with the ability of manufacturing of the machines, with the diameter of the bars, with the features of the manufacturing material and with the production requirements.

For example the patent EP 1356875 describes a method for feeding metal rods in bars which allows to separate the correct number of bars from the bundle to which they belong, for feeding automatically the same bars to the manufacturing plants. The method provides for gripping a group of bars from a store depository of the same bars and for transferring said group of bars to a lifted position. The lifted bars are arranged on a mobile transfer device provided with separation means, for example screw shaped, at which the transversal transport and the counting of a predetermined number of bars to be fed at each working cycle to the machine placed downstream is carried out.

The patent EP 1356876 discloses a method for automatic feeding metal rods in bars, which provides for grasping a group of metal rods from a store depository through gripping means and for transferring such group of rods to a lifted position. The metal rods picked up are arranged on a transfer device suitable to transfer the same rods to receiving means. In a suitable step relationship, the counting of the transferred metal rods is carried out. Such working cycle of picking up, transferring and counting, is repeated until a predetermined number of rods is achieved. The group of picked-up metal rods is disentangled from the bundle through the progressive sliding of the receiving means along the longitudinal axis of the same metal rods.

The application EP 0188850, on which the preamble of the independent claims 1 and 4 is based, finally discloses a device for feeding bars to a cutting apparatus, suitable to cooperate with a store depository for storing the same bars.

It is yet felt the need for an increase of the efficiency and in the safety of the plants for manufacturing the bars, mainly in the loading step of complete bundles of bars to respective ironworks (stock magazine). In fact, such step is usually carried out in an exclusively manual manner, therefore resulting dangerous for the operators as well as burdensome for the productive yields. In fact, when a determined type of bar is depleting in the store depository or in the ironworks (stock magazine) which feeds the manufacturing machine, the operator is obliged to stop the machine downstream the ironworks (stock magazine), in order to be able to operate in sufficiently safe conditions the operations of transferring the required bundles of bars to the ironworks (stock magazine).

Therefore, the specific field of reference complains a considerable waste of time and resources in performing such operations.

### Disclosure

The task of the present invention is that of solving the problems mentioned in the prior art, devising a method and an apparatus for loading metal rods in bars which allows to carry out in an optimal manner the feeding of the rods stored upstream of the manufacturing apparatuses for the same rods.

Within such task, it is a further scope of the present invention that of providing an apparatus which realizes the mentioned feeding of rods and the like with a simple and functional structure, provided with a surely reliable functioning and with a great flexibility of use.

The cited scopes are attained, according to the invention, by the method according to claim 1 and by the apparatus according to claim 4.

The method for feeding metal rods or bars consists of prearranging a preloading structure associated with ironworks (stock magazine) serving an apparatus for processing metal rods in bars. To such purpose, a specific number of bundles of rods are arranged on the above-mentioned preloading structure associated with the ironworks (stock magazine). More precisely the bundles of rods required by the production cycle in progress are arranged, whose depletion results near.

A prerogative of the invention consists in the fact that the previously mentioned preloading structure defines at least a support vane for at least a bundle of preloaded bars, said vane being easily accessible to a loading device of the downstream ironworks (stock magazine).

The above-mentioned vane is in fact realized by a series of longitudinally aligned frameworks, reciprocally spaced, so as to define between two subsequent frameworks and under the supported bars a free operative space. Such operative space allows to intercept the preloaded bars on the preloading structure. In practice, such spaced frameworks structure is suitable to support the bundles while being lifted from ground.

The arrangement of the preloading structure, in particular with the bars grouped in bundle, lifted from ground and supported by the aforesaid frameworks, allows loading means to easily carry out the picking up of the bars in bundles, required by the downstream ironworks (stock magazine).

In particular such picking up occurs through intercepting the bars at the above mentioned free operative space, in a quick and efficient way, by means of said loading device, suitable to embrace the preloaded bars or however to receive them in support on the same device.

The bundles arranged on the preloading structure are preferably and advantageously deprived of the respective binding means. Such operation is preferably carried out on the preloading structure in order to avoid carrying out the same operation on the ironworks (stock magazine) serving the manufacturing apparatus, involving risks for the operator and/or undesired stops for the apparatus for safety reasons in this last case.

When the apparatus detects the opportunity of receiving the preloaded bundles, the above-mentioned loading device is then started, which carries out the picking up of the bundles from the preloading structure and the release of the same bundles to the feeding ironworks (stock magazine) of the manufacturing apparatus for the bars.

It is necessary to point out that the preloading structure in hand is functionally independent from the manufacturing apparatus of the bars arranged downstream. The steps of preloading the structure can basically occur in a completely dissociated manner with respect to the operating steps of manufacturing the bars. This allows to carry out preloading activities, independently from the proper manufacturing steps of the bars through the operating machine, of cutting or folding, that is in hidden time, guaranteeing the complete safety of the involved operators, without compromising the productive yields. The preloading structure is therefore realized as a "protected" zone, in which any automatic movement is inhibited until human presences are detected inside the same.

In particular, according to a particular embodiment of the invention, the loading operations of the ironworks (stock magazine) serving the operating machine can also be carried out by the same feeding device mounted on the manufacturing apparatus of the bars or by a loading device mounted on an autonomous mobile support structure or on a mobile support structure coupled with the feeding device of the apparatus through connection means.

Therefore the method overcomes the drawbacks complained by the specific field, providing for making the loading step of the ironworks (stock magazine) suitable to feed the manufacturing apparatus of the bars autonomous. In such way it is possible to carry out the above-mentioned loading step in complete safety for the operators, avoiding at the same time undesired downtimes or stops of the manufacturing apparatuses.

Furthermore, the proposed solution according to the invention allows to optimize the resources used in the ironworks (stock magazine), loading step, thus reducing to a minimum the involved mechanical means. Even thanks to such optimization, the same mechanical means can be exploited more for other activities.

The method and the apparatus in hand allow to minimize the space occupied by the plant. Such result is achieved through the bars loading from the preloading structure, that occurs thanks to a relative controlled motion of approaching and spacing between the structure and the loading device. Therefore in particular in absence of sufficient available spaces, it can be the preloading structure to approach, for instance to lift, for arranging the bars to be picked up in support on the loading device.

Furthermore, the interaction of the picking up means of the loading device with the bars requires a minimum operative space, substantially recognizable in the free operative space underlying the preloading structure, further minimizing the space required for the functioning of the loading apparatus.

The ironworks (stock magazine) loading cycle can be repeated more than once for loading different compartments of the same ironworks (stock magazine).

According to an advantageous aspect of the invention, at the end of the ironworks loading, the automatic bars loader will be able to restart the normal work of feeding the apparatus for manufacturing the bars, maximizing the productive yields.

Finally according to a particularly advantageous aspect of the invention, the preloading structure comprises a plurality of vanes of containment, each being operated selectively into a motion of reciprocal lifting and lowering with respect to the loading device, for taking to a picking up condition the sole bars required by the productive requirements, while leaving inactive the remaining vanes of the structure.

### Brief description of Drawings

Details of the invention shall be more apparent from the detailed description of a preferred embodiment of the apparatus for loading metal rods in bars, illustrated for indicative purposes in the attached drawings, wherein:
figure 1 and figure 2 respectively show a side view and a plan view of the apparatus for loading metal rods in bars according to the invention;
figures from 3A to 3E respectively show a side view of a detail of the apparatus in subsequent operative steps;
figures from 4A to 4D and from 5A to 5D show a side view of a detail of the apparatus according to further embodiments in subsequent operative steps;
figures 6, 7 and 8 respectively show a schematic side view and respective transversal sections of the preloading structure used in the apparatus in suit;
figure 9 shows a side view of a loading device used in the apparatus in suit, according to a further embodiment.

### Best Mode

With particular reference to such figures, a plant for manufacturing metal rods in bars is indicated in its entirety with 1, in which it is provided the apparatus 10 for loading bars according to the invention.

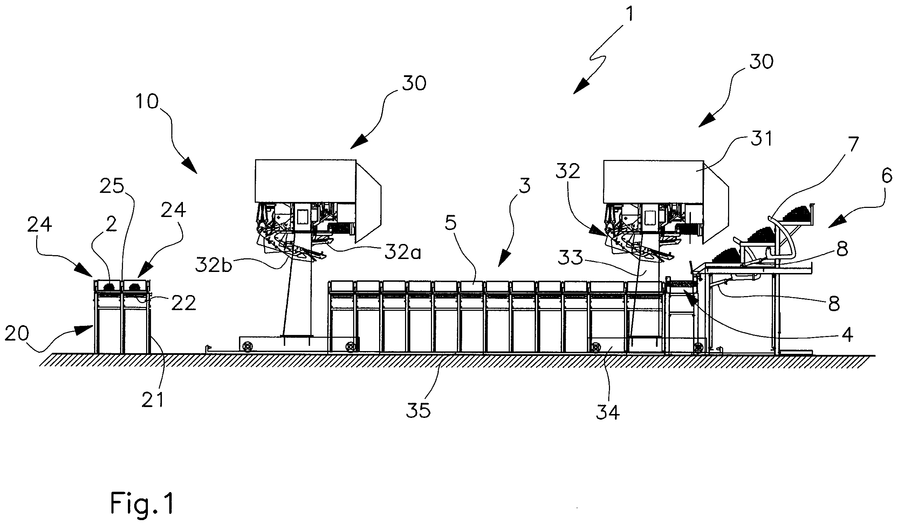

The plant 1 comprises a store depository 3 or ironworks, for the bars 2, a feeding channel 4 of the bars 2 intended to be fed to the apparatus arranged downstream for being manufactured by it, for example cut to measure. The bars manufacturing apparatus is not illustrated for the sake of clarity in the figures. The ironworks 3 comprise a plurality of compartments 5 for receiving respective bundles of bars 2. For example in the case disclosed in figure 1 the ironworks 3 are divided in nine compartments, for receiving respective types of bars 2 to be manufactured, but a different number of compartments 5 can be equally provided.

The feeding channel 4 is preferably realized by means of a motorized roller conveyor, suitable to transfer longitudinally a predetermined number of bars coming from the ironworks 3.

At one side of the feeding roller conveyor 4, the plant 1 can also provide an auxiliary store depository 6 opposite the ironworks 3, for the manual feeding of the bars 2 to the feeding roller conveyor 4. The auxiliary store depository 6, in a known way, is divided in compartments by means of mobile partitions 7 that can be operated through actuator members 8, for opening and closing a respective containment compartment. Said auxiliary store depository has the only purpose to preserve the effectiveness of the plant in case of breakdowns or stops for maintenance of the apparatus for automatic bars loading to the ironworks 3.

The apparatus 10 for loading bars 2 to the ironworks 3 comprises a preloading structure 20 and a loading device 30, suitable to cooperate to allow the automatic loading of bars 2 to the ironworks 3.

The preloading structure 20 arranged at one side of the ironworks 3 has a longitudinal development substantially equal to the maximum length of the bars 2 to be contained. The structure 20 can comprise for example a series of frameworks longitudinally aligned for containing bundles of bars 2. Each framework can comprise at least a couple of upright elements 21 and a support crossbar 22 constrained to the upright elements 21. In particular, the frameworks 20 are reciprocally spaced, so as to form between two subsequent frameworks a free operative space 23, suitable for manipulating bundles 2a of bars 2.

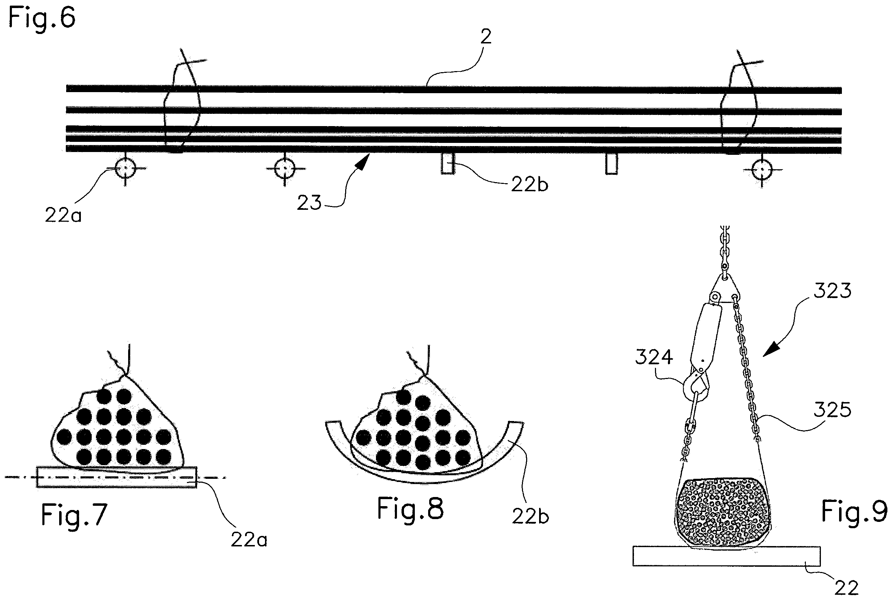

The preloading structure 20, can comprise one or more vanes 24, suitable to receive one or more respective bundles 2a of bars 2. In the disclosed case, for example, each support framework 20 comprises a couple of vanes 24, realized by means of a respective dividing partition 25. Furthermore, the containment crossbars 22 can shape a support vane 24 with a support plane substantially plain or profiled for the bars 2 (see figure 7), for instance realized through rectilinear crossbars 22a, or with a curved support plane, for example realized through curved crossbars 22b, so as to form a vane 24 that is cradle-shaped (see figure 8).

The loading device 30 comprises a support structure 33 and one or more groups supported by the support structure 33, each comprising a head 31 carrying pick-up means 32. The loading device 30 and the preloading structure 20 are mobile relatively one another to allow the loading of bars 2 to the ironworks 3.

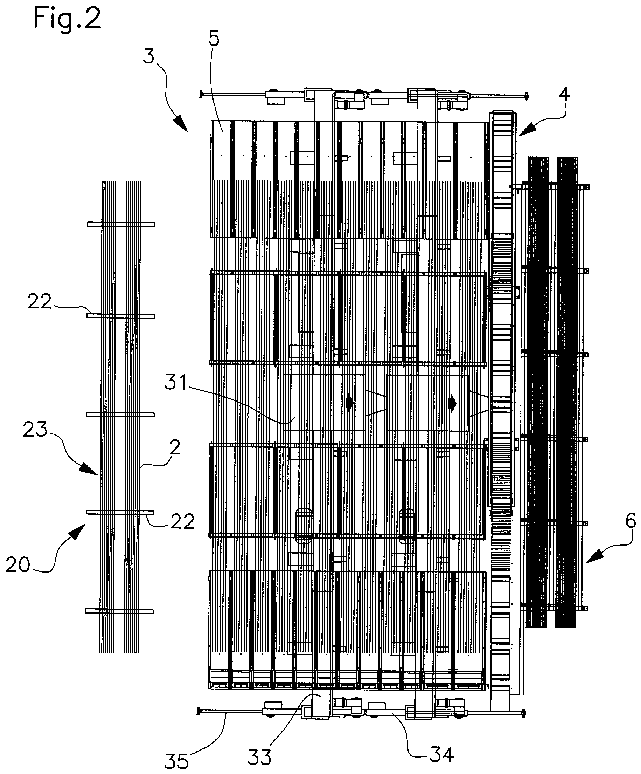

In the case disclosed in figures 1 and 2 the loading device 30 is mobile in a transversal direction to the bars 2 to be loaded, between the ironworks 3 and above it and the preloading structure 20. As an alternative it is possible that the preloading structure 20 is mobile transversally or that both the loading device 30 and the structure 20 are mobile transversally to the ironworks 3.

In the disclosed case, thus, the support group 33 shapes a portal leaned against a carriage 34 slidable on rails 35 transversal to the ironworks 3.

The rails 35 extend at opposite ends of the ironworks 3, substantially from the feeding channel 4 to the preloading structure 20, so that to allow the pick-up means 32 to reach both stations.

The pick-up means 32 can shape for example at least an arm carried mobile by the head 31, tilting according to a tilting direction C between an active position 32a of support and an inactive position 32b of release through the actuation of actuator means 36 (see figures from 1 to 3D).

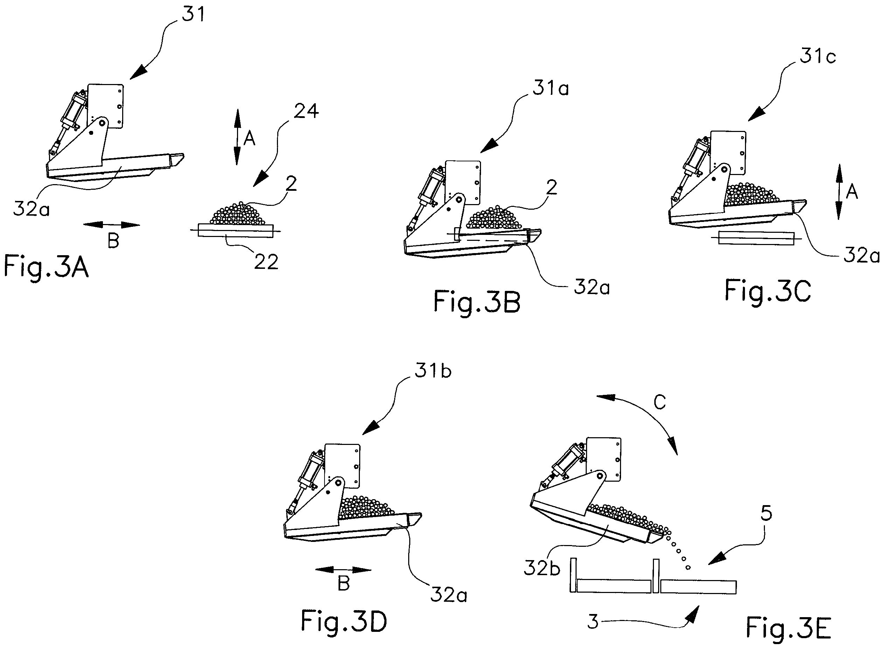

It is important to observe that the head 31 carrying the arm 32 and the preloading structure 20 are mobile relatively along a substantially vertical direction A, according to a pick-up relative motion, so as to allow the pick-up of the preloaded bars 2 and the releasing of the picked up bars 2, other than in the transversal direction B, to allow the transferring of the picked up bars 2 to the ironworks 3 (see figures 3A, 3B, 3C, 3D, 3E). Between the head 31 and the above mentioned preloading structure 20 it basically exists a relative alternative motion between an interaction configuration 31 a, in which the arm 32 is lowered with respect to the support plane defined by the containment vane 24 of the preloaded bars 2 and a spaced configuration 31 b in which the arm 32 is lifted with respect to the support pane defined by the same vane 24. In practice, in the interaction configuration 31 a the pick-up means 32 are suitable to receive the preloaded bars 2, whereas in the spaced configuration 31 b the pick-up means 32 are suitable to load the preloaded bars 2, separating them from the support of the respective containment vane 24 of the preloading structure 20. The head 31 can assume between the interaction configuration 31a and the spaced configuration 31b, intermediate configurations 31c at which the drawn bars 2 are lifted with respect to the vane 24 in an intermediate vertical position.

The functioning of the apparatus for loading bars according to the invention is understandable from the preceding description.

The method for loading bars carried out by the described apparatus provides, in an initial production step, for prearranging the preloading structure 20 at one side of the ironworks 3, in which the bars 2 are collected in the different compartments 5.

Depending on the set up working cycles, it is possible to detect that the bars 2 of a specific type, collected in one or more specific compartments 5, are depleting in short time.

In this initial step the preloading structure 20 is then preloaded with bars 2 of such specific type, so as to prevent the depletion of the required raw material, that would cause burdensome stops to the production. The preloading operations comprise the arrangement of one or more bundles 2a of such bars 2 on the vanes of containment 24 of the preloading structure 20, by means of transport and or/ lifting of known type.

Before or after prearranging the bundles 2a of bars 2 on the preloading structure 20 or following the pick-up step described afterwards, the removal of binding or containing means for the bundles is possibly carried out, if such means is provided. For example it can be necessary to remove strings, straps or similar means for making the preloaded bars 2 free.

In an appropriate step relationship to the functioning of the manufacturing apparatus fed by the ironworks 3, the loading device 30 is operated.

In fact, it is possible to provide that the loading device 30 for the bars 2 in bundles 2a to the ironworks 3 carries out at the same time the automatic feeding of the single bars 2 or of the bars 2 in groups of predetermined number and thus comprises suitable transferring, separating and counting means for the bars 2 picked up from the bundles 2a, substantially according to what is described for example by patents EP 1356875 and EP 1356876 mentioned before.

The loading device 30 is thus handled according to a relative approaching motion along a transversal direction B, for example shifted, for reaching the pick-up station next to the preloading structure 30, with each head 31 being in spaced position 31 b or in intermediate position 31c, so that the arm 32 doesn't interfere with the bars 2 already present on the ironworks 3 in process of horizontal displacement (see figure 3A).

Subsequently, at the pick-up station, each head 31 is taken to an interaction position 31 a and approached to the preloading structure 20, in such a way that the arm 32 can intercept the bundle 2a of bars 2. In particular, in the disclosed case the pick-up means 32 is arranged below the support plane of the vane 24 containing the bundle 2a of bars 2 to be picked up (see figure 3B), so as to intercept them.

Subsequently the head 31 assumes a spaced configuration 31 b relatively to the preloading structure 20 (see figure 3D) passing through intermediate configurations 31C, suitable to transfer intercepted bars 2 from the containment vane 24, loading them (see figure 3C).

The loading device 30 is thus shifted relatively to the ironworks 3 along a transversal direction B, according to a relative spacing motion, for positioning above the compartment 5 to be loaded with the picked up bars 2.

At this point the picked up bars 2 are released to the specific compartment 5 of the ironworks 3, taking the pick-up means 32 to the inactive unload position 32b through the actuation of the actuator means 36. The arm 32 in an inclined configuration can function as a slide for bars 2 picked up from the preloading structure 20, which fall thus in the specific compartment 5, thus loading the ironworks 3 with the bars 2 required by the production cycle in a specific number (see figure 3E).

Drawing means 32 can then come back to the active position, for example for feeding the manufacturing apparatus, as hinted before.

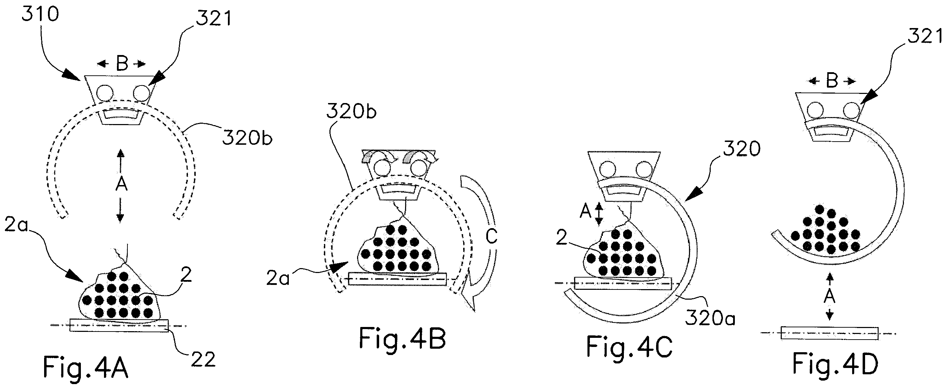

According to a further embodiment of the loading apparatus according to the invention, disclosed in the figures from 4A to 4D, the loading device 30 comprises ring-shaped pick-up means 320, totally similar from a functional point of view to the pick-up means 32 previously described. Unlike the tilting arm 32, the gripping ring 320 is operated mobile by a respective drawing unit 321 carried by the head 310. For example the drawing unit 321 comprises a couple of drawing wheels opposed to a curved guide or to a further third wheel, defining a curved drawing path, concentric to the same ring. The ring 320 is basically drawn, alternatively in a feeding or backing versus according to a tilting direction C through a curved path, so as to intercept or free the bundles 2a of bars 2 or the bars 2. Similarly to the previous case, the ring 320 is therefore mobile between an active position 320a, in which a terminal portion of the ring is suitable to subtend the bars 2 (see figures 4C and 4D), and an inactive position 320b, in which such terminal portion is rotated sideways the bars 2 (see figures 4A and 4B), in a no interference condition.

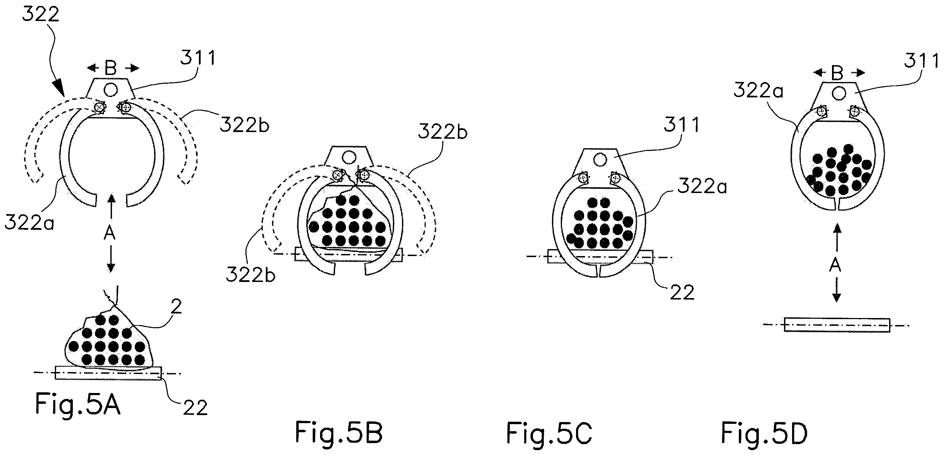

According to a further embodiment, disclosed in figures 5A, 5B, 5C, 5D, the pick-up means is instead realized through a couple of jaws 322 pivoted to the head 311, alternatively mobile according to a tilting motion between a closing active position 322a (see figures 5C and 5D) and an opening inactive position 322b (see figures 5A and 5B). In practice, in the closing active position 322a, the jaws 322 are suitable to contain and retain between them the bars 2 to be picked up, whereas for reaching the opening inactive position 322b from the active position 322a, the jaws 322 are progressively divaricated so as to show a mouth with an opening greater than the side extension of the bundle of bars to be picked up (see figures 5A and 5B), therefore allowing the approaching for the picking up or the release. The disclosed embodiment is for the rest totally similar, from a structural and functional point of view, to the previously described embodiments.

Finally, in figure 9 a fourth embodiment of the pick-up means 323, hook-shaped, is disclosed. Such means can be used both as loading means of the loading structure 20 and as pick-up means for loading the ironworks 3. In particular the hook-shaped means 323 comprise a hook 324 and a chain 325 whose ring-shaped end can be connected to the hook, so as to close as a ring the chain and carry out the pick-up of bars 2. The closure of the chain can be carried out manually or in an automatic manner, for example providing for automatically taking the end of the chain 325 next to the hook 324, for hooking it and for finally operating actuator means for closing the hook 324.

The opening of the chain can instead occur automatically through suitable means that perform the automatic unhooking of the hook 324 when the bars result leaned, and thus the chain 325 is not subjected to pulling actions.

The method and apparatus for loading bars according to the invention attains therefore the scope of carrying out in an optimal manner the feeding of stored rods upstream the manufacturing apparatuses for the same rods.

Such scope is attained in particular through the described apparatus that results very compact and easy to install.

According to an advantageous aspect of the invention the same loading device used for loading the ironworks can be used for feeding the manufacturing apparatus of bars, further simplifying the structure of the manufacturing plant for bars. In each case the described operations for loading the ironworks could be carried out by the same structure that feeds bars 2 to the feeding path or by a structure that can be coupled with it and drawn by it or by a completely autonomous structure provided with its autonomous motion means.

In practice, the embodiment of the invention, the materials used, as well as the shape and dimensions, may vary depending on the requirements.

## Claims

1. Method for loading metal rods or bars to a store depository or stock magazine (3) serving an apparatus for processing said bars (2), said method comprising the steps of:
a). prearranging a preloading structure (20) associated with said stock magazine (3) provided with at least a compartment (5) for storing said bars (2), said preloading structure (20) comprising at least one vane (24) for containing bundles (2a) of bars (2); ;
b). preloading at least one bundle (2a) of bars (2) on said at least one vane (24) of said preloading structure (20);
c). prearranging a loading device (30) provided with pick-up means (32, 320, 322, 323) for said preload bars (2), suitable to be set in motion relatively to said preloading structure (20) for picking up said bars (2) and for transferring them to said at least one compartment (5) of said stock magazine (3);
d). operating a relative approaching motion (B) between said loading device (30) and said preloading structure (20);
e). intercepting at said free operative space (23) said preloaded bars (2) in said vane (24) through a relative pick-up motion (A), with said pick-up means (32, 320, 322, 323) arranged in an active position (32a, 320a, 322a) for supporting said bars (2);
f). operating a relative spacing motion (B) between said pick-up means (32, 320, 322) carried by said loading device (30) and said preloading structure (30), so as to pick up said preloaded bars (2) from said vane (24);
g). operating a relative transfer motion between said loading device (30) and said preloading structure (20) for transferring said picked up bars (2) to said stock magazine (3);
h). discharging said picked up bars (2) in said at least one compartment (5) of said stock magazine (3), arranging said picked up means in an inactive position (32b, 320b, 322b) for releasing said picked up bars (2); **characterised in that**:
- in step a). said vane (24) is realized through a series of longitudinally aligned frameworks, reciprocally spaced, so as to define between two subsequent frameworks and under the stored bars (2) a free operative space (23), suitable for intercepting said preloaded bars (2);
- in step e). said preloaded bars (2) are intercepted at said free operative space (23).

2. Method according to claim 1, **characterized in that**, said step of d). operating a relative approaching motion (B) and e). operating a relative pick-up motion (A) between said loading device (30) and said preloading structure (20), comprise the step of operating said preloading structure (20) in a lifting and/or lowering motion for approaching and transferring said bars (2) to be picked up to said loading device (30).

3. Method according to claim 2, **characterized in that** it comprises the step of selectively operating in a lifting motion the single said vane (24) containing said bars (2) to be picked up.

4. Apparatus for loading metal rods or bars to a store depository or stock magazine (3) serving an apparatus for processing said bars (2), said apparatus comprising a preloading structure (20) associated with said stock magazine (3) provided with at least one compartment (5) for storing said bars (2), said preloading structure (20) comprising at least one vane (24) for containing said preload bars (2); and a loading device (30) provided with pick-up means (32, 320, 322, 323) which can be alternatively operated between an active position (32a, 320a, 322a) for supporting said bars (2) and an inactive position (32b, 320b, 322b) for releasing; said preloading structure (20) and said loading device (30) being able to be set in relative motion for allowing the pick-up of said preload bars (2) through said pick-up means (32, 320, 322, 323) operated in said active position (32a, 320a, 322a) and the transfer of said bars (2) picked up from said preloading structure (20) for their releasing to a said compartment (5) of said stock magazine (3) through said pick-up means (32, 320, 322, 323) operated in said inactive position (32b, 320b, (322b); **characterised in that** :
- said vane (24) is realised by a series of frameworks longitudinally aligned, reciprocally spaced, so as to define between two subsequent frameworks and under the stored bars (2) a free operative space (23) suitable for intercepting said bars (2);
- the pick-up means (32, 320, 322, 323) are adapted to intercept said preloaded bars (2) at said free operative space (23).

5. Apparatus according to claim 4, **characterized in that** said preloading structure (20) can be operated according to an alternative lifting and lowering motion for allowing the pick-up of said bars (2).

6. Apparatus according to claim 5, **characterized in that** said preloading structure (20) comprises a plurality of said containment vanes (24), each of them being able to be operated selectively in said lifting and lowering motion.

7. Apparatus according to one of the claims from 4 to 6, **characterized in that** said loading device (30) comprises a support structure (33) and at least a group supported by said support structure (33), each of them comprising a head (31) carrying said pick-up means (32, 320, 322, 323), said support structure (33) shaping a portal supported by a carriage (34) slidable on rails (35) transversal to said stock magazine (3).

8. Apparatus according to claim 7, **characterized in that** said pick-up means shape an arm (32) carried by said head (31), tilting according to a tilting direction (C) between said active support position (32a) and said inactive release position (32b) through the actuation of actuator means (36).

9. Apparatus according to claim 7, **characterized in that** said pick-up means shape an open gripping ring (320), which can be operated through a drawing unit (321) carried by said head (310), according to a curved drawing path, concentric to the same ring, in an alternative feeding and backing motion according to a tilting direction (C) through said curved path, so as to intercept and free said bars (2).

10. Apparatus according to claim 7, **characterized in that** said pick-up means shape a couple of jaws (322) pivoted to said head (311), alternatively mobile according to a tilting motion between a said closed active position (322a) for retaining said bars (2) and a said inactive open position (322b) for approaching or releasing said bars (2).

## Patentansprüche

1. Verfahren zum Laden von Metallprofilen oder Barren in ein Sammel- oder Speicherlager (3) zu Diensten einer Vorrichtung für die Bearbeitung der genannten Barren (2), wobei diese Methode die folgenden Phasen umfasst:
a). Vorbereiten einer Vorladeeinrichtung (20), die mit dem genannten Speicherlager (3) verbunden ist und die über mindestens eine Ansammlungskammer (5) der genannten Barren (2) verfügt, wobei die genannte Vorladeeinrichtung (20) mindestens ein Rückhaltefach (24) für Barrenbündel (2a) umfasst;
b). Vorladen mindestens eines Bündels (2a) der Barren (2) in dieses zumindest eine genannte Fach (24) der genannten Vorladeeinrichtung (20);
c). Vorbereiten einer Ladevorrichtung (30), die über Entnahmemittel (32, 320, 322, 323) für die genannten vorgeladenen Barren (2) verfügt und die dazu geeignet ist, im Verhältnis zur genannten Vorladeeinrichtung (20) bewegt zu werden, um die genannten Barren (2) zu entnehmen und sie zu dieser zumindest einen genannten Kammer (5) des genannten Speicherlagers (3) zu verschieben;
d). Bewirken einer relativen Annäherungsbewegung (B) zwischen der genannten Ladevorrichtung (30) und der genannten Vorladeeinrichtung (20);
e). Abfangen, an dem genannten freien Arbeitsraum (23), der genannten Barren (2), die in das genannte Fach (24) mittels einer relativen Entnahmebewegung (A) vorgeladen wurden, mit den genannten Entnahmemitteln (32, 320, 322, 323), die in einer aktiven Position (32a, 320a, 322a) zur Stützung der genannten Barren (2) angeordnet sind;
f). Bewirken einer relativen Entfernungsbewegung (B) zwischen den genannten Entnahmemitteln (32, 320, 322), die von der genannten Ladevorrichtung (30) und der genannten Vorladeeinrichtung (30) getragen werden, um die genannten vorgeladenen Barren (2) aus dem genannten Fach (24) zu entnehmen;
g). Bewirken einer relativen Verschiebebewegung zwischen der genannten Ladevorrichtung (30) und der genannten Vorladeeinrichtung (20), um die genannten entnommenen Barren (2) in das genannte Speicherlager (3) zu verschieben;
h). Abladen der genannten Barren (2), die in der zumindest einen genannten Kammer (5) des genannten Speicherlagers (3) entnommen wurden, wobei die genannten Entnahmemittel in einer inaktiven Freigabeposition (32b, 320b, 322b) der genannten entnommenen Barren (2) angeordnet werden; **dadurch gekennzeichnet, dass**:
- in der Phase a). das genannte Fach (24) mittels einer Reihe längs angeordneter Rahmen ausgeführt wird, die so voneinander entfernt sind, dass zwischen zwei aufeinanderfolgenden Rahmen und unterhalb der enthaltenen Barren (2) ein freier Arbeitsraum (23) festgelegt wird, der dazu geeignet ist, die genannten vorgeladenen Barren (2) abzufangen;
- in der Phase e). die genannten Vorladebarren (2) an dem genannten freien Arbeitsraum (23) abgefangen werden.

2. Verfahren nach Anspruch 1, **dadurch gekennzeichnet, dass** die genannten Phasen d). Bewirken einer relativen Annäherungsbewegung (B) und e). Bewirken einer relativen Entnahmebewegung (A) zwischen der genannten Ladevorrichtung (30) und der genannten Vorladeeinrichtung (20), die Phase der Betätigung der genannten Vorladeeinrichtung (20) in einer Hub- und/oder Senkbewegung umfassen, um die genannten, zu entnehmenden Barren (2) an die genannte Ladevorrichtung (30) anzunähern oder zu verschieben.

3. Verfahren nach Anspruch 2, **dadurch gekennzeichnet, dass** es die Phase umfasst, in der selektiv eine Hubbewegung nur des genannten Fachs (24), das die genannten zu entnehmenden Barren (2) enthält, bewirkt wird.

4. Vorrichtung für das Laden von Metallprofilen oder Barren in ein Sammel- oder Speicherlager (3) zu Diensten einer Vorrichtung für die Bearbeitung der genannten Barren (2), wobei die genannte Vorrichtung eine Vorladeeinrichtung (20) umfasst, die mit dem genannten Speicherlager (3) verbunden ist und die zumindest über eine Kammer (5) für das Sammeln der genannten Barren (2) verfügt, wobei die genannte Vorladeeinrichtung (20) zumindest ein Rückhaltefach (24) für die genannten Vorladebarren (2) umfasst und eine Ladevorrichtung (30), die über Entnahmemittel (32, 320, 322, 323) verfügt, die sich abwechselnd zwischen einer aktiven Stützungsposition (32a, 320a, 322a) für die genannten Barren (2) und einer inaktiven Freigabeposition (32b, 320b, 322b) betätigen lassen;
wobei die genannte Vorladeeinrichtung (20) und die genannte Ladevorrichtung (30) in relativer Bewegung positionierbar sind, um die Entnahme der genannten Vorladebarren (2) mittels der genannten Entnahmemittel (32, 320, 322, 323) zu gestatten, die in der genannten aktiven Position (32a, 320a, 322a) betätigt werden und die Verschiebung der genannten aus der genannten Vorladeeinrichtung (20) entnommenen Barren (2) für die Freigabe an eine genannte Kammer (5) des genannten Speicherlagers (3) mittels der genannten Entnahmemittel (32, 320, 322, 323) zu gestatten, die in der genannten inaktiven Position (32b, 320b, 322b) betätigt werden, **dadurch gekennzeichnet, dass**:
das genannte Fach (24) mittels einer Reihe längs angeordneter Rahmen ausgeführt wird, die so voneinander entfernt sind, dass zwischen zwei aufeinanderfolgenden Rahmen und unterhalb der enthaltenen Barren (2) ein freier Arbeitsraum (23) festgelegt wird, der dazu geeignet ist, die genannten Barren (2) abzufangen;
- die Entnahmemittel (32, 320, 322, 323) dazu geeignet sind, die genannten Vorladebarren (2) an dem genannten freien Arbeitsraum (23) abzufangen.

5. Vorrichtung nach Anspruch 4, **dadurch gekennzeichnet, dass** die genannte Vorladeeinrichtung (20) sich gemäß einer abwechselnden Hub- und Senkbewegung betätigen lässt, um die Entnahme der genannten Barren (2) zu gestatten.

6. Vorrichtung nach Anspruch 5, **dadurch gekennzeichnet, dass** die genannte Vorladeeinrichtung (20) eine Mehrzahl der genannten Rückhaltefächer (24) umfasst, von denen sich jedes selektiv bei der genannten Hub-/und Senkbewegung betätigen lässt.

7. Vorrichtung nach den Ansprüchen 4 und 6, **dadurch gekennzeichnet, dass** die genannte Ladevorrichtung (30) eine Stützstruktur (33) und mindestens eine von dieser Stützstruktur (33) gestützte Einheit (33) umfasst, von denen jede einen Kopf (31) umfasst, der die genannten Entnahmemittel trägt (32, 320, 322, 323), wobei die genannte Stützstruktur (33) ein Portal bildet, das auf einem Wagen (34) ruht, der auf Schienen (35) fährt, die quer zum genannten Speicherlager (3) sind.

8. Vorrichtung nach Anspruch 7, **dadurch gekennzeichnet, dass** die genannten Entnahmemittel einen Arm bilden (32), der von dem genannten Kopf (31) getragen wird, der gemäß einer Schwenkrichtung (C) zwischen der genannten aktiven Unterstützungsposition (32a) und der genannten inaktiven Freigabeposition (32b) mittels der Betätigung von Antriebsmitteln (36) schwenkbar ist.

9. Vorrichtung nach Anspruch 7, **dadurch gekennzeichnet, dass** die genannten Entnahmemittel einen offenen Greifring (320) bilden, der sich mittels einer Vorschub-Einheit (321) betätigen lässt, die von dem genannten Kopf (310) getragen wird, gemäß einem gebogenen Vorschubweg, konzentrisch zum Ring selbst, bei einer abwechselnden Vorschub- und Rückzugsbewegung gemäß einer Schwenkrichtung (C) mittels dieses gebogenen Vorschubwegs, so dass die genannten Barren (2) abgefangen und freigegeben werden.

10. Vorrichtung nach Anspruch 7, **dadurch gekennzeichnet, dass** die genannten Entnahmemittel ein Backenpaar (322) bilden, das mit dem genannten Kopf (311) auf drehbare Weise verzapft ist, wobei sie sich gemäß einer Schwenkbewegung abwechselnd zwischen einer genannten aktiven Schließposition (322a), um die genannten Barren (2) festzuhalten und einer genannten inaktiven Öffnungsposition (322b), um die genannten Barren (2) heranzuholen oder freizugeben, bewegen lassen.

## Revendications

1. Méthode pour le chargement de profilés métalliques ou de barres sur un magasin de stockage ou de dépôt (3) au service d'un appareil pour le travail desdites barres (2), ladite méthode comprenant les phases de :
a). prédisposer une structure de précharge (20) associée audit dépôt (3) munie d'au moins un compartiment (5) d'accumulation desdites barres (2), ladite structure de précharge (20) comprenant au moins un casier (24) de contention pour des faisceaux (2a) de barres ;
b). précharger au moins un faisceau (2a) de barres (2) sur ledit au moins un casier (24) de ladite structure de précharge (20) ;
c). prédisposer un dispositif de charge (30) muni de moyens de prélèvement (32, 320, 322, 323) pour lesdites barres (2) préchargées, apte à être manutentionné relativement à ladite structure de précharge (20) pour prélever lesdites barres (2) et pour les transférer audit au moins un compartiment (5) dudit dépôt (3) ;
d). actionner un mouvement relatif de rapprochement (B) entre ledit dispositif de charge (30) et ladite structure de précharge (20) ;
e). intercepter au niveau dudit espace d'exploitation libre (23) lesdites barres (2) préchargées dans ledit casier (24) au moyen d'un mouvement relatif de prélèvement (A), avec lesdits moyens de prélèvement (32, 320, 322, 323) disposés dans une position active (32a, 320a, 322a) de support pour lesdites barres (2) ;
f). actionner un mouvement relatif d'éloignement (B) entre lesdits moyens de prélèvement (32, 320, 322) portés par ledit dispositif de charge (30) et ladite structure de précharge (30), de manière à prélever lesdites barres (2) préchargées dudit casier (24) ;
g). actionner un mouvement relatif de transfert entre ledit dispositif de charge (30) et ladite structure de précharge (20) pour transférer lesdites barres (2) prélevées audit dépôt (3) ;
h). décharger lesdites barres (2) prélevées dans ledit au moins un compartiment (5) dudit dépôt (3), disposant lesdits moyens de prélèvement dans une position inactive (32b, 320b, 322b) de relâchement desdites barres (2) prélevées ; **caractérisée en ce que** :
- dans la phase a). ledit casier (24) est réalisé au moyen d'une série de châssis alignés longitudinalement, réciproquement écartés, de manière à définir entre deux châssis successifs et au-dessous des barres (2) contenues un espace d'exploitation libre (23) approprié à l'interception desdites barres (2) préchargées ;
- dans la phase e). lesdites barres (2) de précharge sont interceptées au niveau dudit espace d'exploitation libre (23).

2. Méthode selon la revendication 1, **caractérisée en ce que** ladite phase d). actionner un mouvement relatif de rapprochement (B) et e). actionner un mouvement relatif de prélèvement (A) entre ledit dispositif de charge (30) et ladite structure de précharge (20), comprennent la phase d'actionner ladite structure de précharge (20) dans un mouvement de soulèvement et/ou d'abaissement pour rapprocher et transférer lesdites barres (2) à prélever audit dispositif de charge (30).

3. Méthode selon la revendication 2, **caractérisée en ce qu'**elle comprend la phase d'actionner sélectivement dans un mouvement de soulèvement seulement ledit casier (24) contenant lesdites barres (2) à prélever.

4. Appareil pour le chargement de profilés métalliques ou de barres sur un magasin de stockage ou de dépôt (3) au service d'un appareil pour le travail desdites barres (2), ledit appareil comprenant une structure de précharge (20) associée audit dépôt (3) muni d'au moins un compartiment (5) pour l'accumulation desdites barres (2), ladite structure de précharge (20) comprenant au moins un casier de contention (24) pour lesdites barres (2) de précharge et un dispositif de charge (30) muni de moyens de prélèvement (32, 320, 322, 323) actionnables alternativement entre une position active (32a, 320a, 322a) de support pour lesdites barres (2) et une position inactive (32b, 320b, 322b) de relâchement ;
ladite structure de précharge (20) et ledit dispositif de charge (30) étant positionnables en mouvement relatif pour permettre le prélèvement desdites barres (2) de précharge au moyen desdits moyens de prélèvement (32, 320, 322, 323) actionnés dans ladite position active (32a, 320a, 322a) et le transfert desdites barres (2) prélevées de ladite structure de précharge (20) pour le relâchement dans un dit compartiment (5) dudit dépôt (3) au moyen desdits moyens de prélèvement (32, 320, 322, 323) actionnés dans ladite position inactive (32b, 320b, 322b) ; **caractérisé en ce que** :
ledit casier (24) est réalisé au moyen d'une série de châssis alignés longitudinalement, réciproquement écartés, de manière à définir entre deux châssis successifs et au-dessous des barres (2) contenues un espace d'exploitation libre (23) approprié à l'interception desdites barres (2) ;
- les moyens de prélèvement (32, 320, 322, 323) sont aptes à intercepter lesdites barres (2) de précharge au niveau dudit espace d'exploitation libre (23).

5. Appareil selon la revendication 4, **caractérisé en ce que** ladite structure de précharge (20) est actionnable selon un mouvement alternatif de soulèvement et d'abaissement pour permettre le prélèvement desdites barres (2).

6. Appareil selon la revendication 5, **caractérisé en ce que** ladite structure de précharge (20) comprend une pluralité desdits casiers (24) de contention, chacun étant actionnable sélectivement dans ledit mouvement de soulèvement et d'abaissement.

7. Appareil selon l'une des revendications de 4 à 6, **caractérisé en ce que** ledit dispositif de charge (30) comprend une structure de soutien (33) et au moins un ensemble soutenu par ladite structure de soutien (33), chacun comprenant une tête (31) portant lesdits moyens de prélèvement (32, 320, 322, 323), ladite structure de soutien (33) conformant un portail appuyé sur un chariot (34) coulissant sur des rails (35) transversaux audit dépôt (3).

8. Appareil selon la revendication 7, **caractérisé en ce que** lesdits moyens de prélèvement conforment un bras (32) porté par ladite tête (31), oscillant selon une direction d'oscillation (C) entre ladite position active (32a) de support et ladite position inactive (32b) de relâchement au moyen de l'actionnement de moyens actionneurs (36).

9. Appareil selon la revendication 7, **caractérisé en ce que** lesdits moyens de prélèvement conforment une bague de préhension (320) ouverte, actionnable au moyen d'un ensemble d'entraînement (321) porté par ladite tête (310), selon un parcours d'entraînement courbé, concentrique à la bague elle-même, dans un mouvement alternatif d'avancée et de recul selon une direction d'oscillation (C) à travers ledit parcours courbé, de manière à intercepter et libérer lesdites barres (2).

10. Appareil selon la revendication 7, **caractérisé en ce que** lesdits moyens de prélèvement conforment une paire de mâchoires (322) montées pivotantes sur ladite tête (311), alternativement mobiles selon un mouvement d'oscillation entre une dite position active (322a) de fermeture pour retenir lesdites barres (2) et une dite position inactive (322b) d'ouverture pour rapprocher ou relâcher lesdites barres (2).
